Europäisches Patentamt

European Patent Office

Office européen des brevets

(19)

(11) **EP 0 753 603 B1**

(12) **EUROPEAN PATENT SPECIFICATION**

(45) Date of publication and mention
of the grant of the patent:
**12.01.2000 Bulletin 2000/02**

(51) Int Cl.[7]: **C23C 28/04**, C23C 16/30,
C23C 16/40, B23B 27/14

(21) Application number: **96850129.6**

(22) Date of filing: **04.07.1996**

(54) **Coated cutting insert**

Beschichteter Schneideinsatz

Plaquette de coupe revêtue

(84) Designated Contracting States:
**AT CH DE FR GB IT LI SE**

(30) Priority: **14.07.1995 SE 9502640**

(43) Date of publication of application:
**15.01.1997 Bulletin 1997/03**

(73) Proprietor: **SANDVIK AKTIEBOLAG**
**811 81 Sandviken (SE)**

(72) Inventors:
• **Ljungberg, Björn**
**122 44 Enskede (SE)**

• **Akesson, Leif**
**125 51 Älvsjö (SE)**

(74) Representative: **Östlund, Alf Olof Anders**
**Sandvik AB**
**Patent Department**
**811 81 Sandviken (SE)**

(56) References cited:
**EP-A- 0 600 115          EP-A- 0 685 572**
**EP-A- 0 709 484          EP-A- 0 736 615**

## Description

The present invention relates to a coated cutting tool (cemented carbide insert) particularly useful for intermittent cutting in low alloyed steel.

Low alloyed steel is a material which, in general, is difficult to machine with coated or uncoated cemented carbide tools. Smearing of workpiece material onto the cutting edge and flaking of the coating often occur. The cutting condition is particularly difficult when intermittent machining is employed under wet conditions (using coolant).

When machining low alloyed steels by coated cemented carbide tools the cutting edge is worn by chemical wear, abrasive wear and by a so called adhesive wear. The adhesive wear is often the tool life limiting wear. Adhesive wear occurs when fragments or individual grains of the layers and later also parts of the cemented carbide are successively pulled away from the cutting edge by the workpiece chip formed. Further when wet cutting is employed the wear may also be accelerated by an additional wear mechanism. Coolant and workpiece material may penetrate into the cooling cracks of the coatings. This penetration often leads to a chemical reaction between workpiece material and coolant with the cemented carbide. The Co-binder phase may oxidise in a zone near the crack and along the interface between the coating and the cemented carbide. After some time coating fragments are lost piece by piece.

EP-A-0736 615 discloses a coated cutting insert particularly useful for dry milling of grey cast iron. The insert is characterised by a straight WC-Co cemented carbide substrate and a coating including an innermost layer of $TiC_xN_yO_z$ with columnar grains and a top coating of a fine grained $\alpha$-$Al_2O_3$-layer.

It has surprisingly been found that by combining the following features: a cemented carbide body with a highly W-alloyed binder phase, a columnar $TiC_xN_yO_z$-layer, a textured $\alpha$-$Al_2O_3$-layer, a treatment of the coating surface by wet-blasting or by brushing an excellent cutting tool for low alloyed steel cutting can be obtained.

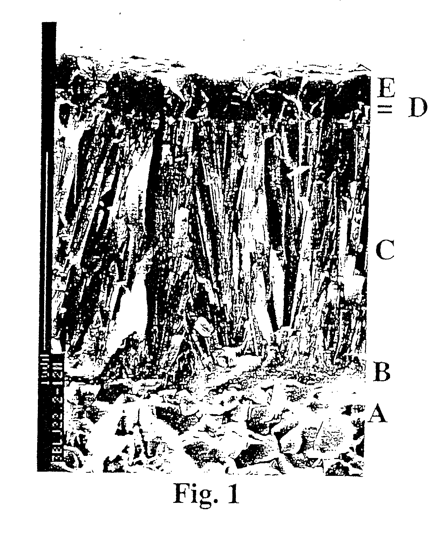

Fig 1 is a micrograph in 5000X magnification of a coated insert according to the present invention in which

    A - cemented carbide body
    B - $TiC_xN_yO_z$-layer with equiaxed grains
    C - $TiC_xN_yO_z$ - layer with columnar grains
    D - $TiC_xN_yO_z$-layer with equiaxed or needle like
    E - textured $\alpha$-$Al_2O_3$-layer with columnar like grains

According to the present invention a cutting tool insert is provided with a cemented carbide body of a composition 5 - 11 wt-% Co, preferably 5 - 8 wt-% Co, <10 wt-%, preferably 1.5 - 7.5 wt-%, cubic carbides of the metals Ti, Ta and/or Nb and balance WC. The grain size of the WC is 1 - 3 $\mu$m, preferably about 2 $\mu$m. The cobalt binder phase is highly alloyed with W. The content of W in the binder phase can be expressed as the

$$CW\text{-ratio}= M_s /(wt\text{-}\% \text{ Co} \cdot 0.0161),$$

where $M_s$ is the measured saturation magnetization of the cemented carbide body and wt-% Co is the weight percentage of Co in the cemented carbide. The CW-value is a function of the W content in the Co binder phase. A low CW-value corresponds to a high W-content in the binder phase.

It has now been found according to the invention that improved cutting performance is achieved if the cemented carbide body has a CW-ratio of 0.76 - 0.93, preferably 0.80 - 0.90. The cemented carbide body may contain small amounts, <1 volume-%, of eta phase ($M_6C$), without any detrimental effect. In a preferred embodiment a thin (about 15 - 35 $\mu$m) surface zone depleted of cubic carbides and often enriched in binder phase can be present according to prior art such as disclosed in US 4,610,931. In this case the cemented carbide may contain carbonitride or even nitride.

The coating comprises

- a first (innermost) layer of $TiC_xN_yO_z$ with x+y+z=1, preferably z<0.5, with a thickness of 0.1 - 2 $\mu$m, and with equiaxed grains with size <0.5 $\mu$m
- a second layer of $TiC_xN_yO_z$ x+y+z=1, preferably with z=0 and x>0.3 and y>0.3, with a thickness of 2 - 15 $\mu$m, preferably 5 - 8 $\mu$m, with columnar grains and with a diameter of about <5 $\mu$m, preferably <2 $\mu$m
- a third layer of $TiC_xN_yO_z$, x+y+z=1 with z$\leq$0.5, preferably z>0.1, with a thickness of 0.1 - 2 $\mu$m and with equiaxed or needle like grains with size $\leq$0.5 $\mu$m, this layer being the same as or different from the innermost layer
- a fourth layer of a smooth, textured, fine-grained (grain size about 0.5 - 2 $\mu$m) $\alpha$-$Al_2O_3$-layer with a thickness of 2 - 10 $\mu$m, preferably 3 - 6 $\mu$m, and a surface roughness $R_{max}\leq$0.4 $\mu$m over a length of 10 $\mu$m. Preferably, this $Al_2O_3$-layer is the outermost layer but it may also be followed by further layers such as a thin (about 0.1 - 1 $\mu$m) decorative layer of e g TiN.

In addition, the $\alpha$-$Al_2O_3$-layer has a preferred crystal growth orientation in either the (104)-, (012)- or (110)-direction, preferably in the (012)-direction, as determined by X-ray Diffraction (XRD) measurements. A Texture Coefficient, TC, can be defined as:

$$TC(hkl) = \frac{I(hkl)}{I_o(hkl)} \left\{ \frac{1}{n} \Sigma \frac{I(hkl)}{I_o(hkl)} \right\}^{-1}$$

where

I(hkl) = measured intensity of the (hkl) reflection
$I_o$(hkl) = standard intensity of the ASTM standard powder pattern diffraction data
n = number of reflections used in the calculation, (hkl) reflections used are: (012), (104), (110), (113), (024), (116)

According to the invention TC for the set of (012), (104) or (110) crystal planes is larger than 1.3, preferably larger than 1.5.
According to method of the invention a WC-Co-based cemented carbide body having a highly W-alloyed binder phase with a CW-ratio according to above is coated with

- a first (innermost) layer of $TiC_xN_yO_z$ with x+y+z=1, preferably z<0.5, with a thickness of 0.1 - 2 μm, and with equiaxed grains with size <0.5 μm using known CVD-methods.
- a second layer of $TiC_xN_yO_z$ x+y+z=1, preferably with z=0 and x>0.3 and y>0.3, with a thickness of 2 - 15 μm, preferably 5 - 8 μm, with columnar grains and with a diameter of about <5 μm, preferably <2 μm, deposited preferably by MTCVD-technique (using acetonitrile as the carbon and nitrogen source for forming the layer in the temperature range of 700 - 900 °C) preferably 850-900°C. The exact conditions, however, depend to a certain extent on the design of the equipment used.
- a third layer of $TiC_xN_yO_z$, x+y+z=1 with z≤0.5, preferably z>0.1, with a thickness of 0.1 - 2 μm and with equiaxed or needle like grains with size ≤0.5 μm, using known CVD-methods this layer being the same as or different from the innermost layer.
- a fourth (outer) layer of a smooth, textured $\alpha$-$Al_2O_3$-layer according to Swedish patent 501 527 or Swedish patent applications 9304283-6 or 9400089-0 with a thickness of 2 - 10 μm, preferably 3 - 6 μm, and a surface roughness $R_{max}$≤0.4 μm over a length of 10 μm. The smooth coating surface can be obtained by a gentle wet-blasting the coating surface with fine grained (400 - 150 mesh) alumina powder or by brushing the edges with brushes based on e g SiC as been disclosed in the Swedish patent application 9402543-4.

When a $TiC_xN_yO_z$-layer with z>0 is desired, $CO_2$ and/or CO are/is added to the reaction gas mixture.

Example 1

A. Cemented carbide cutting tool inserts of style CNMG 120408-SM with the composition 7.5 wt-% Co, 1.8 wt-% TiC, 0.5 wt-% TiN, 3.0 wt-% TaC, 0.4 wt-% NbC and balance WC with a binder phase highly alloyed with W corresponding to a CW-ratio of 0.88 were coated with a 0.5 μm equiaxed TiCN-layer followed by a 7 μm thick TiCN-layer with columnar grains by using MTCVD-technique (process temperature 850 °C and $CH_3CN$ as the carbon/nitrogen source). In subsequent process steps during the same coating cycle, a 1 μm thick layer of $TiC_xN_yO_z$ (about x=0.6, y=0.2 and z=0.2) with equiaxed grains was deposited followed by a 4 μm thick layer of (012)-textured $\alpha$-$Al_2O_3$ deposited according to conditions given in Swedish patent 501 527. XRD-measurement showed a texture coefficient TC(012) of 1.6 for the $\alpha$-$Al_2O_3$-layer. The cemented carbide body had a surface zone about 25 um thick, depleted from cubic carbides.
B. Cemented carbide cutting tool inserts of style CNMG 120408-SM from the same batch as in A.) were coated with a 0.5 μm equiaxed TiCN-layer followed by a 7 μm thick TiCN-layer with columnar grains by using MTCVD-technique (process temperature 850 °C and $CH_3CN$ as the carbon/nitrogen source). In subsequent process steps during the same coating cycle, a 1 μm thick layer of $TiC_xN_yO_z$ (about x=0.6, y=0.2 and z=0.2) with equiaxed grains was deposited followed by a 4 μm thick layer of (104)-textured $\alpha$-$Al_2O_3$ deposited according to conditions given in Swedish patent application 9400089-0. XRD-measurement showed a texture coefficient TC(104) of 1.7 for the $\alpha$-$Al_2O_3$-layer.
C. Cemented carbide cutting tool inserts of style CNMG 120408-SM with the composition 6.5 wt-% Co and 8.8 wt-% cubic carbides (3.3 wt-% TiC, 3.4 wt-% TaC and 2.1 wt-% NbC) and balance WC were coated under the procedure given in A). The cemented carbide body had a CW-ratio of 1.0. XRD-measurement showed a texture coefficient TC(012) of 1.5 for the $\alpha$-Al$_2$O$_3$-layer.

D. Cemented carbide cutting tool inserts of style CNMG120408-SM from the same batch as in A.) were coated with a 6 um equiaxed layer of TiCN followed by a 4 $\mu$m thick layer of Al$_2$O$_3$-layer according to prior art technique. XRD-analysis showed that the Al$_2$O$_3$-layer consisted of a mixture of $\alpha$ and $\kappa$-Al$_2$O$_3$, approximately in the ratio 30/70.

E. Cemented carbide cutting tool inserts from the same batch as in C) were coated according to the procedure given in D.). XRD-analysis showed that the Al$_2$O$_3$-layer consisted of a mixture of $\alpha$ and $\kappa$-Al$_2$O$_3$ in a ratio of about 20/80.

Before performing the cutting tests all inserts from A.)-E.) were wet blasted using an alumina-water slurry in order to smooth the coating surfaces.

The inserts were tested in an intermittent longitudinal turning operation. The workpiece material was a low alloyed low carbon steel (SCr420H) in the shape of a 22 mm thick ring with an outer diameter of 190 mm and an inner diameter of 30 mm. Each longitudinal passage over the ring thickness consisted of 22 in-cuts of one mm each. The number of passages over the ring thickness until flaking occurred was recorded for each variant.

| Variant | | Number of passages before edge flaking |
|---------|--|----------------------------------------|
| A.) | according to the invention highly W-alloyed cemented carbide body columnar coating/012-$\alpha$-Al$_2$O$_3$ | 165 |
| B.) | according to the invention highly W-alloyed cemented carbide body columnar coating/104-$\alpha$-Al$_2$O$_3$ | 117 |
| C.) | low W-alloyed cemented carbide body columnar coating/ 012-$\alpha$-Al$_2$O$_3$(comparative) | 60 |
| D.) | highly W-alloyed cemented carbide body equiaxed coating/ $\alpha$+$\kappa$-Al$_2$O$_3$(comparative) | 15 |
| E.) | low W-alloyed cemented carbide body equiaxed coating/ $\alpha$+$\kappa$-Al$_2$O$_3$(comparative) | 15 |

Example 2

F. Cemented carbide cutting tool inserts of style CNMG 120408-QM with the composition 7.5 wt-% Co, 2.3 wt-% TiC, 3.0 wt-% TaC, 0.4 wt-% NbC and balance WC and a binder phase highly alloyed with W corresponding to a CW-ratio of 0.83 were coated with a 0.5 $\mu$m equiaxed TiCN-layer followed by a 7 $\mu$m thick TiCN-layer with columnar grains by using MTCVD-technique (process temperature 850 °C and CH$_3$CN as the carbon/nitrogen source). In subsequent process steps during the same coating cycle, a 1 $\mu$m thick layer with equiaxed grains of TiC$_x$N$_y$O$_z$ (about x=0.6, y=0.2 and z=0.2) was deposited followed by a 4 $\mu$m thick layer of (012)-textured $\alpha$-Al$_2$O$_3$ deposited according to conditions given in Swedish patent 501 527. The cemented carbide body did not have any depleted zone of cubic carbides near the surface (as the inserts had in Example 1, A.).

XRD-measurement showed a texture coefficient TC(012) of 1.5 of the $\alpha$-Al$_2$O$_3$-layer.

G. Cemented carbide cutting tool inserts in style CNMG12040-QM with the composition 5.5 wt-% Co and 8.4 wt-% cubic carbides (2.6 wt-% TiC, 3.5 wt-% TaC and 2.3 wt-% NbC) and balance WC were coated according to the procedure given in D.). The cemented carbide body had a CW-ratio of 0.98.

XRD-analysis showed that the Al$_2$O$_3$-layer consisted of a mixture of $\alpha$ and $\kappa$-Al$_2$O$_3$ in approximate ratio of 25/75

H. Cemented carbide cutting tool inserts from the same batch as in G.) were coated under the procedure given in A) XRD-measurement showed a texture coefficient TC(012) of 1.6.

All insert F.)-G.) were brushed in order to smooth the coating surface along the cutting edge and tested according to the method given in example 1.

| Variant | | Number of passages before edge flaking |
|---------|--|----------------------------------------|
| F.) | according to the invention highly W-alloyed cemented carbide body columnar coating/012-$\alpha$-Al$_2$O$_3$ | 150 |

(continued)

| Variant | | Number of passages before edge flaking |
|---|---|---|
| G.) | highly W-alloyed cemented carbide body equiaxed coating/ $\alpha$+$\kappa$-Al$_2$O$_3$(comparative) | 15 |
| H.) | low W-alloyed cemented carbide body columnar coating/ 012-$\alpha$-Al$_2$O$_3$(comparative) | 60 |

## Claims

1. A cutting tool insert for machining of low alloyed steel comprising a cemented carbide body and a coating **characterised** in said cemented carbide body consisting of WC, 5-11 wt-% Co and 0-10 wt-% cubic carbides of metals from groups IVb, Vb or VIb of the periodic table (DEMING 1923) and a highly W-alloyed binder phase with a CW-ratio of 0.76-0.93 and in said coating comprising

   - a first (innermost) layer of TiC$_x$N$_y$O$_z$ with x+y+z=1 with a thickness of 0.1-2 $\mu$m, and with equiaxed grains with size <0.5 $\mu$m
   - a layer of TiC$_x$N$_y$O$_z$ with x+y+z=1 with a thickness of 2-15 $\mu$m with columnar grains with a diameter of about <5 $\mu$m
   - a layer of TiC$_x$N$_y$O$_z$ with x+y+z=1 and z$\leq$0.5 with a thickness of 0.1-2 $\mu$m and with equiaxed or needle like grains with size $\leq$0.5 $\mu$m
   - an outer layer of a smooth, textured, fine-grained (0.5-2 $\mu$m) $\alpha$-Al$_2$O$_3$-layer with a thickness of 2-10 $\mu$m and surface roughness R$_{max}$$\leq$0.4 $\mu$m over a length of 10 $\mu$m.

2. Cutting insert according to the preceding claim **characterised** in that the $\alpha$-Al$_2$O$_3$-layer has a texture in (012)-direction and with a texture coefficient TC(012) larger than 1.3.

3. Cutting insert according to claim 1 **characterised** in that the $\alpha$-Al$_2$O$_3$-layer has a texture in the (104)-direction and with a texture coefficient TC(104) larger than 1.3.

4. Cutting insert according to claim 1 **characterised** in that the $\alpha$-Al$_2$O$_3$-layer has a texture in (110)-direction and with a texture coefficient TC(110) larger than 1.3.

5. Cutting insert according to the preceding claims **characterised** in an outermost coating of a thin 0.1 - 1 $\mu$m TiN-layer.

6. Method of making a cutting insert comprising a cemented carbide body and a coating **characterised** in said WC-Co-based cemented carbide body consisting of WC, 5-11 wt Co and 0-10 wt% cubic carbides of metals from qroups IVb,Vb or VIb of the periodic table (Deming 1923) and a higly W-alloyed binder phase with a CW-ratio of 0.76-0.93 is coated with

   - a first (innermost) layer of TiC$_x$N$_y$O$_z$ with x+y+z=1 with a thickness of 0.1-2 $\mu$m, with equiaxed grains with size <0.5 $\mu$m using known CVD-methods
   - a layer of TiC$_x$N$_y$O$_z$ with x+y+z=1 with a thickness of 2-15 $\mu$m with columnar grains and with a diameter of about <5 $\mu$m deposited by MTCVD-technique in the temperature ranqe of 700-900 oC, using acetonitrile as the carbon and nitrogen source for forming the layer.
   - a layer of TiC$_x$N$_y$O$_z$ with x+y+z=1 and z<0.5 with a thickness of 0.1-2 $\mu$m with equiaxed or needle like grains with size $\leq$0.5 $\mu$m, using known CVD-methods
   - an outer layer of a smooth textured $\alpha$-Al$_2$O$_3$-layer textured in the direction (012), (104) or (110) with a thickness of 2-10 $\mu$m and a surface roughness R$_{max}$$\leq$0.4 $\mu$m over a length of 10 $\mu$m.

## Patentansprüche

1. Schneidwerkzeugeinsatz zur Bearbeitung von niedrig legiertem Stahl mit einem Hartmetallkörper und einer Beschichtung, dadurch gekennzeichnet, daß der Hartmetallkörper aus WC, 5-11 Gew.-% Co und 0-10 Gew.-% kubischen Carbiden von Metallen aus den Gruppen IVb, Vb, Vlb des Periodensystems (Deming 1923) sowie aus einer W-hochlegierten Bindephase mit einem CW-Verhältnis von 0,76-0,93 besteht und in der Beschichtung

- eine erste (innerste) Schicht von $TiC_xN_yO_z$, wobei x+y+z=1, mit einer Dicke von 0,1-2µm und mit globulitischem Korn mit einer Größe <0.5 µm,
- eine Schicht von $TiC_xN_yO_z$, mit x+y+z=1, mit einer Dicke von 2-15 µm mit säulenartigem Korn mit einem Durchmesser <5 µm,
- eine Schicht $TiC_xN_yO_{z,}$, mit x+y+z=1 und z<0,5 mit einer Dicke von 0.1-2µm und mit globulitischem oder nadelartigem Korn mit einer Größe ≤0.5 und
- eine Außenschicht einer glatten, texturierten, feinkörnigen (0,5-2 µm) $\alpha$-$Al_2O_3$-Schicht mit einer Dicke von 2-10 µm und einer Oberflächenrauheit $R_{max}$≤0,4 µm über eine Länge von 10 µm umfaßt.

2. Schneideinsatz nach dem vorausgehenden Anspruch, dadurch gekennzeichnet, daß die $\alpha$-$Al_2O_3$-Schicht eine Textur in (012)-Richtung und mit einem Texturkoeffizienten TC (012) größer als 1,3 hat.

3. Schneideinsatz nach Anspruch 1, dadurch gekennzeichnet, daß die $\alpha$-$Al_2O_3$-Schicht eine Textur in der (104)-Richtung und mit einem Texturkoeffizienten TC(104) größer als 1,3 hat.

4. Schneideinsatz nach Anspruch 1, dadurch gekennzeichnet, daß die $\alpha$-$Al_2O_3$-Schicht eine Textur in der (110)-Richtung und mit einem Texturkoeffizienten TC(110) größer als 1,3 hat.

5. Schneideinsatz nach den vorausgehenden Ansprüchen, gekennzeichnet durch eine äußerste Beschichtung mit einer dünnen 0,1-1 um dicken TiN-Schicht.

6. Verfahren zur Herstellung eines Schneideinsatzes mit einem Hartmetallkörper und einer Beschichtung, dadurch gekennzeichnet, daß der Hartmetallkörper auf WC-Co-Basis aus WC, 5-11 Gew.-% Co und 0-10 Gew.-% kubischen Carbiden von Metallen aus den Gruppen IVb, Vb oder Vlb des Periodensystems (Deming 1923) sowie eine W-hochlegierte Bindephase mit einem CW-Verhältnis von 0,76-0,93 besteht und mit

- einer ersten (innersten) Schicht von $TiC_XN_YO_Z$ mit einer Dicke von 0,1-2 µm mit globulitischem Korn mit einer Größe <0,5 µm unter Verwendung bekannter CVD-Methoden,
- eine Schicht von $TiC_XN_YO_Z$ mit x+y+z=1 mit einer Dicke von 2-15 µm mit säulenartigem Korn und mit einem Durchmesser von etwa <5 µm, abgeschieden durch MTCVD-Technik im Temparaturbereich von 700 -900°C unter Verwendung von Acetonitril als die Kohlenstoff- und Stickstoffquelle zur Bildung der Schicht,
- eine Schicht von $TiC_XN_YO_Z$ mit x+y+z=1 und z<0,5 mit einer Dicke von 0,1-2 um mit globulitischem oder nadelartigem Korn mit einer Größe ≤0,5 µm unter Verwendung bekannter CVD- Methoden und
- einer Außenschicht einer glatten texturierten $\alpha$-$Al_2O_3$- Schicht, texturiert in der Richtung (012), (104) oder (110) mit einer Dicke von 2-10 µm und einer Oberflächenrauheit $R_{max}$≤0,4 µm über eine Länge von 10 µm beschichtet wird.

## Revendications

1. Plaquette d'outil de coupe pour usinage d'acier faiblement allié comprenant un corps de carbure cémenté et un revêtement caractérisée en ce que ledit corps de carbure cémenté est constitué de WC, de 5 à 11% en poids de Co et de 0 à 10% en poids de carbures cubiques de métaux des Groupes IVb, Vb ou VIb du Tableau Périodique (Deming 1923) et d'une phase de liant fortement alliée avec W avec un rapport CW de 0,76 à 0,93 et en ce que ledit revêtement comprend:

- une première couche (la plus interne) de $TiC_xN_yO_z$ avec x+y+z=1, avec une épaisseur de 0,1 à 2 µm, et avec des grains équiaxiaux de taille inférieure à 0,5 µm,
- une couche de $TiC_xN_yO_z$ x+y+z=1 avec une épaisseur de 2 à 15 µm, avec des grains colonnaires avec un diamètre inférieure à environ 5 µm,
- une couche de $TiC_xN_yO_z$ avec x+y+z=1 et z<0,5, avec une épaisseur de 0,1 à 2 µm et avec des grains équiaxiaux ou analogues à des aiguilles, d'une taille ≤ 0,5 µm,
- une couche externe d'une couche de $\alpha$-$Al_2O_3$ lisse, texturée, à grain fin (0,5 à 2 µm) avec une épaisseur de 2 à 10 µm, et une rugosité de surface $R_{max}$ ≤ 0,4 µm sur une longueur de 10 µm.

**2.** Plaquette de coupe selon la revendication précédente caractérisée en ce que la couche $\alpha$-Al$_2$O$_3$ possède une texture dans la direction (012) et avec un coefficient de texture TC(012) supérieur à 1,3.

**3.** Plaquette de coupe selon la revendication 1 caractérisée en ce que la couche $\alpha$-Al$_2$O$_3$ possède une texture dans la direction (104) et avec un coefficient de texture TC(104) supérieur à 1,3.

**4.** Plaquette de coupe selon la revendication 1 caractérisée en ce que la couche $\alpha$-Al$_2$O$_3$ possède une texture dans la direction (110) et avec un coefficient de texture TC(110) supérieur à 1,3.

**5.** Plaquette de coupe selon les revendications précédentes caractérisée en un revêtement le plus externe d'une couche de TiN d'une épaisseur de 0,1 à 1 $\mu$m.

**6.** Procédé de fabrication d'une plaquette de coupe comprenant un corps de carbure cémenté et un revêtement caractérisée en ce que ledit corps de carbure cémenté à base de WC-Co est constitué de WC, de 5 à 11% en poids de Co et de 0 à 10% en poids de carbures cubiques de métaux des Groupes IVb, Vb ou VIb du Tableau Périodique (Deming 1923) et d'une phase de liant fortement alliée avec W avec un rapport CW de 0,76 à 0,93 est revêtu avec:

- une première couche (la plus interne) de TiC$_x$N$_y$O$_z$ avec x+y+z=1, avec une épaisseur de 0,1 à 2 $\mu$m, et avec des grains équiaxiaux de taille inférieure à 0,5 $\mu$m en utilisant des procédés connus CVC,
- une couche de TiC$_x$N$_y$O$_z$ avec x+y+z=1 avec une épaisseur de 2 à 15 $\mu$m, avec des grains colonnaires avec un diamètre d'environ inférieur à 5 $\mu$m déposée à l'aide de la technique MTCVD dans la gamme de températures de 700 à 900°C, en utilisant l'acétonitrile en tant que source de carbone et d'azote pour former la couche,
- une couche de TiC$_x$N$_y$O$_z$ avec x+y+z=1 et z<0,5, avec une épaisseur de 0,1 à 2 $\mu$m et avec des grains équiaxiaux ou analogues à des aiguilles, d'une taille $\leq$ 0,5 $\mu$m, en utilisant des procédé CVD connus
- une couche externe d'une couche de $\alpha$-Al$_2$O$_3$ lisse, texturée dans la direction (012), (104) ou (110) avec une épaisseur de 2 à 10 $\mu$m, et une rugosité de surface R$_{max}$ $\leq$ 0,4 $\mu$m sur une longueur de 10 $\mu$m.

Fig. 1